# EUROPEAN PATENT APPLICATION

(11) **EP 4 310 952 A1**
(43) Date of publication of application: **24.01.2024**
(21) Application number: 22804034.1
(22) Date of filing: 19.05.2022
(51) Int. Cl.: H01M 4/505, H01M 4/525

(54) **IRON-MANGANESE-BASED POSITIVE ELECTRODE MATERIAL, AND PREPARATION METHOD THEREFOR AND USE THEREOF**

(30) Priority: 19.05.2021 CN 202110548476
(71) Applicant: SVOLT ENERGY TECHNOLOGY CO., LTD, Changzhou, Jiangsu 213200 (CN)
(72) Inventor: CHEN, Sixian, hangzhou, Jiangsu 213200 (CN); JIANG, Weijun, hangzhou, Jiangsu 213200 (CN); XU, Xinpei, hangzhou, Jiangsu 213200 (CN); ZHENG, Xiaoxing, hangzhou, Jiangsu 213200 (CN)
(74) Representative: Groth & Co. KB
(86) International application number: PCT/CN2022/093828
(87) International publication number: WO 2022/242714

(57) **Abstract**

The present application provides an iron-manganese-based positive electrode material, and a preparation method therefor and the use thereof. The preparation method comprises the steps of: S1, subjecting an inorganic compound of lithium and a FeₓMn_{y}(OH)₂ precursor to oxidation sintering to obtain an intermediate product, wherein 0<x<1.0, 0<y<1.0, and x+y=1, and the ratio of the molar amount of Li in the inorganic compound of lithium to the total molar amount of Fe and Mn in the FₓMn_{y}(OH)₂ precursor is (0.1-0.5):1; and S2, subjecting the intermediate product to a second sintering under nitrogen or first inert gas atmosphere conditions to obtain the iron-manganese-based positive electrode material. The iron-manganese-based positive electrode material obtained by the preparation method of the present application has a relatively low content of a lithium element and a more stable structure, such that the intercalation and deintercalation process of lithium ions between the positive electrode and the electrolyte will not affect the original structure of the iron-manganese-based positive electrode material, and the cycling stability of the lithium-ion battery is further ensured.

## Description

The present application is based on and claims the priority of the Chinese Patent Application with CN application No. 202110548476.9 and the application date of May 19, 2021. The disclosure content of this CN application is incorporated into the present application in its integrity.

### TECHNICAL FIELD

The present application relates to the technical field of lithium-ion positive electrode batteries, in particular to an iron-manganese-based positive electrode material and a preparation method therefor and a use thereof.

### BACKGROUND

With the increasingly prominent problems such as energy crisis and environmental pollution, the development and utilization of new energy is imperative. In the next few years, the application demand of lithium-ion batteries in the new energy vehicle industry will continue to increase.

In new energy vehicles, lithium-ion batteries occupy a core position, and positive electrode materials are of primary importance in lithium-ion batteries. Take the NCM523 power battery as an example, the positive electrode material accounts for as much as 32% of the cost in the NCM523 power battery, while the electrolyte, separator and negative electrode material together account for only about 25%. In addition to the cost factor, the electrochemical performance of the positive electrode material is also closely related to the overall performance of the battery.

Therefore, it is in line with the future development trend to develop a method for preparing positive electrode materials for lithium-ion battery from resource-rich iron and manganese materials. In the prior art, iron-manganese-based positive electrode materials are usually prepared by a three-step method (i.e. co-precipitation-solvothermal-solid phase sintering method), and the main steps for preparing the above materials are: (1) subjecting the mixed solution of iron salt, manganese salt and lithium salt to carry out a co-precipitation reaction to obtain a precursor; (2) mixing the precursor with the lithium salt, and adding a solvent to carry out a solvothermal reaction; and (3) mixing the sample obtained by the solvothermal reaction with lithium hydroxide according to a certain proportion, and then performing high temperature oxidation and calcination, to obtain the finished positive electrode material.

The preparation process of this method is complex and the preparation period is relatively long, which is not conducive to industrial production and cost control, and due to the solvothermal process, it is easy to cause problems such as poor crystallinity and poor morphology of the material, thereby affecting the performance of the positive electrode material. The iron-manganese-based positive electrode material prepared by the general method has a lithium-rich structure. On the one hand, the lithium-rich structure contains an unstable Li₂MnO₃ phase, it is easy to decompose during the charge and discharge process, which will release oxygen and increase the concentration of cations, so that the charge capacity is high and the discharge capacity is low, leading to the problem of low first efficiency; on the other hand, the cycling stability is also poor.

### SUMMARY OF THE INVENTION

The main object of the present application is to provide an iron-manganese-based positive electrode material and preparation method therefor and use thereof, so as to solve the problem of poor cycling stability of iron-manganese-based positive electrode materials in the prior art.

In an aspect of the present application, in order to achieve the above object, a method for preparing an iron-manganese-based positive electrode material is provided. The method for preparing an iron-manganese-based positive electrode material comprises: step S1, subjecting an inorganic compound of lithium and a FeₓMn_{y}(OH)₂ precursor to oxidation sintering to obtain an intermediate product, wherein 0<x<1.0, 0<y<1.0, and x+y=1, and the ratio of the molar amount of Li in the inorganic compound of lithium to the total molar amount of Fe and Mn in the FeₓMn_{y}(OH)₂ precursor is (0.1-0.5): 1; and step S2, subjecting the intermediate product to a second sintering under nitrogen or a first inert gas atmosphere to obtain the iron-manganese-based positive electrode material.

Further, the oxidation sintering in the above-mentioned step S1 is carried out in an oxygen-containing gas, and the oxygen-containing gas has an oxygen content ranging from 20% to 100%, the oxygen-containing gas has a flow rate ranging from 2L/min to 5L/min; and the oxidation sintering is carried out at a temperature ranging from 500°C to 700°C for a holding time ranging from 3h to 8h, and a heating rate before the oxidation sintering is in a range from 2°C/min to 4°C/min.

Further, the above-mentioned first inert gas is selected from one of argon and helium, and the nitrogen or the first inert gas has a flow rate ranging from 2L/min to 5L/min, the second sintering is carried out at a temperature ranging from 800°C to 1100°C for a holding time ranging from 5h to 10h, a heating rate after the oxidation sintering and before the second sintering is in a range from 2°C/min to 4°C/min, the inorganic compound of lithium is selected from one or both of lithium salt and lithium hydroxide, and the lithium salt is selected from one or more of lithium carbonate, lithium chloride and lithium bromide.

Further, the above-mentioned the method for preparing the iron-manganese-based positive electrode material further comprises a process of preparing the FeₓMn_{y}(OH)₂ precursor, the process of preparing the FeₓMn_{y}(OH)₂ precursor comprises the steps of: under alkaline conditions, subjecting a first raw material system including ferrous salt and divalent manganese salt to carry out a co-precipitation reaction to obtain the FeₓMn_{y}(OH)₂ precursor.

Further, the above-mentioned ferrous salt is selected from one or more of ferrous chloride, ferrous nitrate and ferrous oxalate, and the divalent manganese salt is selected from one or more of manganese chloride, manganese nitrate and manganese acetate, preferably, in the first raw material system, the molar ratio of Mn²⁺ to Fe²⁺ is (1-10): 1.

Further, the pH value of the above-mentioned first raw material system is in a range from 10 to 13; preferably, an alkaline reagent is used to adjust the pH value of the first raw material system, and the alkaline reagent is selected from one or more of sodium hydroxide and sodium carbonate.

Further, the above-mentioned co-precipitation reaction is carried out at a temperature ranging from 40°C to 60°C, and the co-precipitation reaction is preferably carried out in nitrogen or a second inert gas atmosphere, the second inert gas is selected from one of argon, helium and hydrogen; preferably, stirring is performed during the co-precipitation reaction; and preferably, a stirring rate is in a range from 200 rpm to 400 rpm.

Further, the above-mentioned first raw material system further comprises a complexing agent and a solvent, and the process of preparing the FeₓMn_{y}(OH)₂ precursor comprises: step S1, mixing the ferrous salt, the divalent manganese salt, the complexing agent and the solvent to obtain the first raw material system; preferably, the complexing agent is selected from one or more of ammonia water, ammonium sulfate and ethylenediaminetetraacetic acid; and preferably, in the first raw material system, the complexing agent has a content ranging from 0.8mol/L to 1.5mol/L; and step S2, in the nitrogen or the second inert gas atmosphere and under the stirring condition, after heating the first raw material system to the temperature of the co-precipitation reaction, mixing the first raw material system with the alkali reagent to carry out the co-precipitation reaction, and obtaining the FeₓMn_{y}(OH)₂ precursor after aging.

In another aspect of the present application, an iron-manganese-based positive electrode material is also provided, which is obtained by any one of the above-mentioned methods for preparing an iron-manganese-based positive electrode material.

In yet aspect of the present application, a lithium-ion battery is provided, comprising an electrolyte, a positive electrode material and a negative electrode material, wherein the positive electrode material comprises an iron-manganese-based positive electrode material, wherein the iron-manganese-based positive electrode material is any one of the above-mentioned iron-manganese-based positive electrode materials.

With the technical solution of the present application, the ratio of the molar amount of Li in the inorganic compound of lithium to the total molar amount of Fe and Mn in the FeₓMn_{y}(OH)₂ precursor is controlled to be (0.1-0.5): 1, namely the amount of lithium is much lower than that of iron and manganese, and then an oxidation sintering and a sintering under nitrogen or inert gas atmosphere are successively carried out, so that the content of lithium in the final iron-manganese-based positive electrode material is low, while iron and manganese are the main metal elements in the iron-manganese-based positive electrode material. At the same time, through the sintering in different atmospheres in the above two stages, the oxidation valence state of each metal element in the intermediate product can be controlled, and then the oxidation of manganese to the spinel structure can be avoided while ensuring the oxidation of ferrous elements, and the second sintering can make the lithium element be fully recombined with the iron and manganese elements, so that the formed iron-manganese-based positive electrode material is more stable. Due to the lower content of lithium element and more stable structure in the formed iron-manganese-based positive electrode material, the electrochemical reaction is ingeniously used in the process of charging and discharging, so that the intercalation and deintercalation of lithium ions between the positive electrode and the electrolyte will not affect the original structure of the iron-manganese-based positive electrode material, thereby ensuring the cycling stability of the lithium-ion battery when the iron-manganese-based positive electrode material obtained in the present application is used as the positive electrode material of the lithium-ion battery.

### BRIEF DESCRIPTION OF THE DRAWINGS

The drawings which form a part of the present application are provided for further understanding of the present application, the schematic embodiment and description of the present application serve to explain the present application instead of forming a improper limitation on the present application, in which:

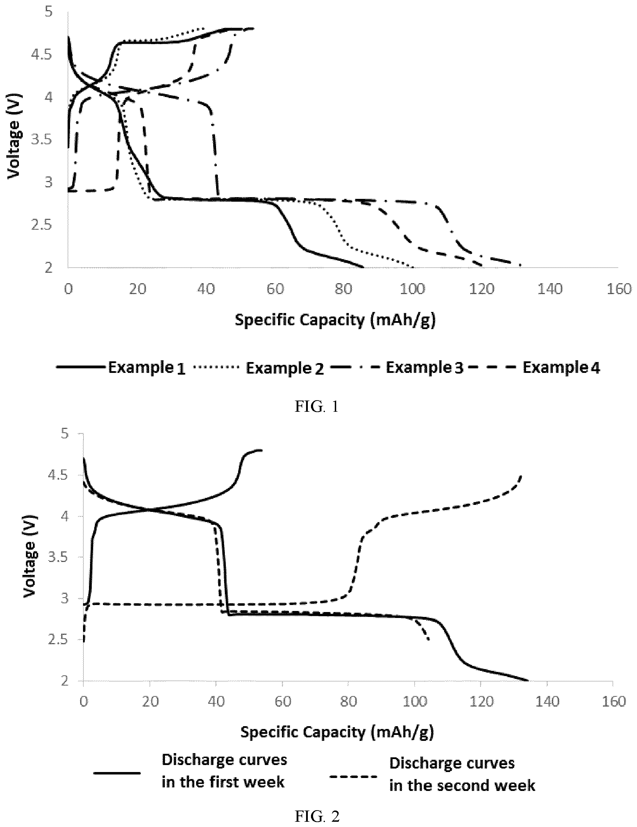

FIG. 1 shows the charge and discharge capacity curves in the first week of lithium-ion batteries comprising the iron-manganese-based positive electrode materials prepared respectively in Examples 1 to 4 of the present application;
FIG. 2 shows the charge and discharge capacity curves in the first and second weeks of a lithium-ion battery comprising the iron-manganese-based positive electrode material prepared in Example 3 of the present application;

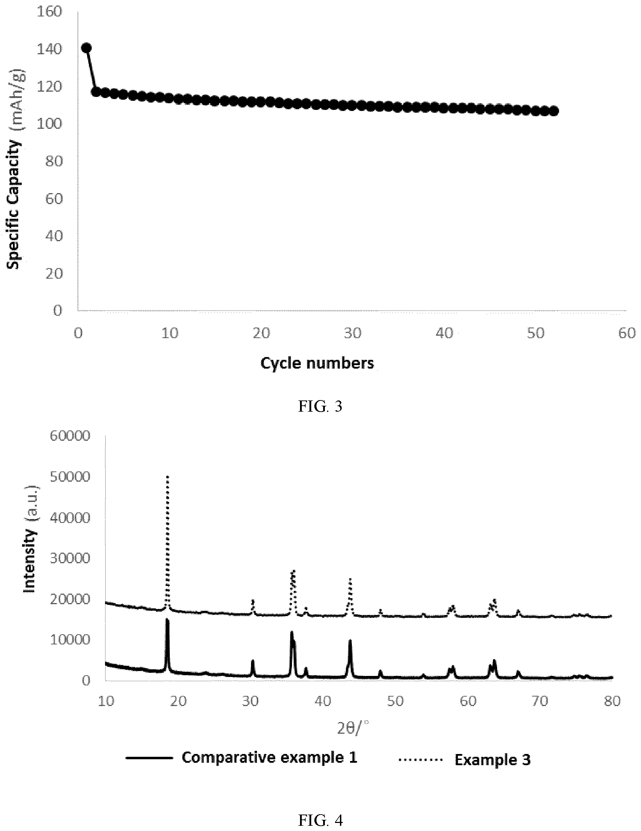

FIG. 3 shows the cycle performance curves of a lithium-ion battery comprising the iron-manganese-based positive electrode material prepared in Example 3 of the present application;
FIG. 4 shows an XRD pattern of lithium-ion batteries comprising the iron-manganese-based positive electrode materials prepared respectively in Example 3 and Comparative Example 1 of the present application; and

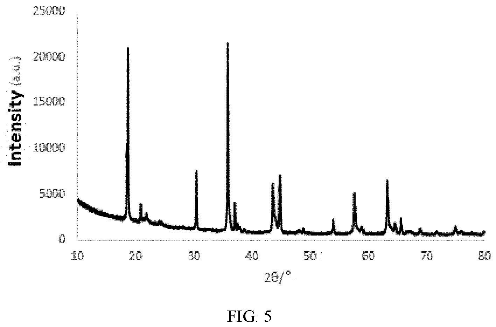

FIG. 5 shows an XRD pattern of a lithium-ion battery comprising the iron-manganese-based positive electrode material prepared in Comparative Example 2 of the present application.

### DETAILED DESCRIPTION

It should be noted that, the embodiments in the present application and the features in the embodiments can be combined with each other in the case of no conflict. The present application will be described in detail below with reference to the accompanying drawings and in combination with the examples.

As described in the background of the present application, the iron-manganese-based positive electrode materials in the prior art are poor in cycling stability when used as positive electrodes for lithium-ion batteries. In order to solve the above problems, provided is a method for preparing an iron-manganese-based positive electrode material in the first aspect of the present application. The method for preparing an iron-manganese-based positive electrode material comprises: step S1, subjecting an inorganic compound of lithium and a FeₓMn_{y}(OH)₂ precursor to oxidation sintering to obtain an intermediate product, wherein 0<x<1.0, 0<y<1.0, and x+y=1, and the ratio of the molar amount of Li in the inorganic compound of lithium to the total molar amount of Fe and Mn in the FeₓMn_{y}(OH)₂ precursor is (0.1-0.5): 1; and step S2, subjecting the intermediate product to a second sintering under nitrogen or a first inert gas atmosphere to obtain the iron-manganese-based positive electrode material.

In the above-mentioned method of the present application, the ratio of the molar amount of Li in the inorganic compound of lithium to the total molar amount of Fe and Mn in the FeₓMn_{y}(OH)₂ precursor is controlled to be (0.1-0.5): 1, namely the amount of lithium is much lower than that of iron and manganese, and then an oxidation sintering and a sintering under nitrogen or inert gas atmosphere are successively carried out, so that the content of lithium in the final iron-manganese-based positive electrode material is low (the structural general formula is LiₐFeₓMnyO₂, a: (x+y)≤0.5), while iron and manganese are the main metal elements in the iron-manganese-based positive electrode material. At the same time, through the sintering in different atmospheres in the above two stages, the oxidation valence state of each metal element in the intermediate product can be controlled, and then the oxidation of manganese to the spinel structure can be avoided while ensuring the oxidation of ferrous elements, and the second sintering can make the lithium element be fully recombined with the iron and manganese elements, so that the formed iron-manganese-based positive electrode material is more stable. Moreover, the above-mentioned iron-manganese-based positive electrode material does not contain Li₂MnO₃ phase, so there will be no problems of oxygen release and cation concentration increase due to Li₂MnO₃ phase being easily decomposed during charging and discharging. In addition, due to the lower content of lithium element and more stable structure in the formed iron-manganese-based positive electrode material, the electrochemical reaction is ingeniously used in the process of charging and discharging, so that the intercalation and deintercalation of lithium ions between the positive electrode and the electrolyte will not affect the original structure of the iron-manganese-based positive electrode material, thereby ensuring the cycling stability of the lithium-ion battery when the iron-manganese-based positive electrode material obtained in the present application is used as the positive electrode material of the lithium-ion battery.

The oxidation sintering of the present application can realize the oxidation of the raw material metal according to the methods commonly used in the prior art. In order to more flexibly and accurately control the oxidation degree of iron and manganese by oxidation sintering, preferably the oxidation sintering in the above-mentioned step S1 is carried out in an oxygen-containing gas. The above-mentioned oxygen-containing gas can be selected from air, pure oxygen or other oxygen-containing gases. Preferably a volume content of oxygen in the oxygen-containing gas is in a range from 20% to 100%. If the oxygen content lower than the above range, the oxygen partial pressure in the oxygen-containing gas is relatively low, resulting in a low oxidation process and a large energy loss. In some embodiments of the present application, in order to strictly control the generation of the spinel structure of manganese, preferably the oxygen-containing gas has a flow rate ranging from 2L/min to 5L/min; and preferably the oxidation sintering is carried out at a temperature ranging from 500°C to 700°C for a holding time ranging from 3h to 8h. By further limiting the above conditions, the comprehensive average valence state of manganese and iron in the iron-manganese-based positive electrode material can be well controlled to be between 3.5 and 3.9. Preferably, a heating rate before the oxidation sintering is in a range from 2°C/min to 4°C/min. If the heating rate is lower than the above range, the preparation time will be too long, and if it is higher than the above range, it may lead to a decrease in the structural integrity of the material.

The first inert gas in the present application can be selected from inert gases commonly used in the prior art, preferably the above first inert gas is selected from one of argon and helium. Preferably, the nitrogen or the first inert gas has a flow rate ranging from 2L/min to 5L/min, preferably the second sintering is carried out at a temperature ranging from 800°C to 1100°C for a holding time ranging from 5h to 10h. By further limiting the above sintering conditions, Li can be reacted more fully, thereby further improving the structural integrity of the iron-manganese-based positive electrode material of the present application, and improving its cycling stability. Preferably, a heating rate after the oxidation sintering and before the second sintering is in a range from 2°C/min to 4°C/min. If the heating rate is lower than the above range, the preparation time will be too long, and if it is higher than the above range, it may cause more defects in the material structure.

The inorganic compound of lithium used in the present application can be selected by those skilled in the art from the inorganic compounds of lithium commonly used in the prior art, such as lithium salt selected from one or more of lithium carbonate, lithium chloride and lithium bromide.

In some embodiments of the present application, the above-mentioned preparation method further comprises a process of preparing the FeₓMn_{y}(OH)₂ precursor, the process of preparing the FeₓMn_{y}(OH)₂ precursor comprises the steps of: under alkaline conditions, subjecting a first raw material system including ferrous salt and divalent manganese salt to carry out a co-precipitation reaction to obtain the FeₓMn_{y}(OH)₂ precursor. The FeₓMn_{y}(OH)₂ precursor of the present application does not need to carry out solvothermal reaction after co-precipitation reaction, and the preparation method is simple. Moreover, the structural stability of the iron-manganese-based positive electrode material in the present application does not depend on the crystal structure formed by the solvothermal reaction, thereby avoiding the problems of poor structural stability of the positive electrode material caused by poor crystallinity and poor morphology of the crystals formed by the solvothermal reaction. Those skilled in the art can refer to the prior art to select ferrous salt and divalent manganese salt. In order to further improve the efficiency and effect of the co-precipitation reaction, preferably the ferrous salt is selected from one or more of ferrous chloride, ferrous nitrate and ferrous oxalate, and preferably the divalent manganese salt is selected from one or more of manganese chloride, manganese nitrate and manganese acetate. Preferably, in the first raw material system, the molar ratio of Mn²⁺ to Fe²⁺ is (1-10): 1. Preferably, the ratio of x to y is (1-3): 1. When the content of Mn and Fe in the precursor is within the above range, the average valence state of manganese and iron can reach 3.5 to 3.9 in the subsequent oxidation sintering process, thereby improving the structural stability of the material.

In order to form the FeₓMn_{y}(OH)₂ precursor better and more efficiently, preferably the pH value of the first raw material system is in a range from 10 to 13; preferably an alkaline reagent is used to adjust the pH value of the first raw material system. The above-mentioned alkaline reagents can be selected from alkaline reagents commonly used in the prior art. In order to have a better reaction effect with ferrous salts and manganous salts to form the FeₓMn_{y}(OH)₂ precursor with less fluctuations in Fe and Mn content, preferably, the alkaline reagent is selected from one or more of sodium hydroxide and sodium carbonate.

In some embodiments, preferably the co-precipitation reaction is carried out at a temperature ranging from 40°C to 60°C, so that the reaction rate and degree can be further improved. Preferably, the co-precipitation reaction is carried out in nitrogen or a second inert gas atmosphere, the second inert gas is selected from one of argon, helium and hydrogen, so that the materials that have not fully reacted can be further reacted, and at the same time it is ensured that the Mn element will not be oxidized. Preferably, stirring is performed during the co-precipitation reaction; and preferably, a stirring rate is in a range from 200 rpm to 400 rpm, so that the each raw material is dispersed more evenly and the reaction is conducted more completely.

In some embodiments, preferably, the first raw material system further comprises a complexing agent and a solvent. By using the complexing agent, the FeₓMn_{y}(OH)₂ precursor formed by each ferrous salt and manganous salt is more stable. Preferably, the process for preparing the FeₓMn_{y}(OH)₂ precursor comprises: step S1, mixing the ferrous salt, the divalent manganese salt, the complexing agent and the solvent to obtain the first raw material system; and step S2, in the nitrogen or the second inert gas atmosphere and under the stirring condition, after heating the first raw material system to the temperature of the co-precipitation reaction, mixing the first raw material system with the alkali reagent to carry out the co-precipitation reaction, and obtaining the FeₓMn_{y}(OH)₂ precursor after aging. The complexing agent and solvent of the present application can be selected from complexing agents and solvents commonly used in the art. In order to further improve the stability of the FeₓMn_{y}(OH)₂ precursor, preferably, the complexing agent is selected from one or more of ammonia water, ammonium sulfate and ethylenediaminetetraacetic acid (EDTA); and preferably, in the first raw material system, the complexing agent has a content ranging from 0.8mol/L to 1.5mol/L.

In the second aspect of the present application, further provided is an iron-manganese-based positive electrode material, which is prepared by any one of the above-mentioned methods.

In the above-mentioned method of the present application, the ratio of the molar amount of Li in the inorganic compound of lithium to the total molar amount of Fe and Mn in the FeₓMn_{y}(OH)₂ precursor is controlled to be 0.1:1-0.5:1, namely the amount of lithium is much lower than that of iron and manganese, and then an oxidation sintering and a sintering under nitrogen or inert gas atmosphere are successively carried out, so that the content of lithium in the final iron-manganese-based positive electrode material is low, while iron and manganese are the main metal elements in the iron-manganese-based positive electrode material. At the same time, through the sintering in different atmospheres in the above two stages, the oxidation valence state of each metal element in the intermediate product can be controlled, and then the oxidation of manganese to the spinel structure can be avoided while ensuring the oxidation of ferrous elements, and the second sintering can make the lithium element be fully recombined with the iron and manganese elements, so that the formed iron-manganese-based positive electrode material is more stable. Due to the lower content of lithium element and more stable structure in the formed iron-manganese-based positive electrode material, the electrochemical reaction is ingeniously used in the process of charging and discharging, so that the intercalation and deintercalation of lithium ions between the positive electrode and the electrolyte will not affect the original structure of the iron-manganese-based positive electrode material, thereby ensuring the cycling stability of the lithium-ion battery when the iron-manganese-based positive electrode material obtained in the present application is used as the positive electrode material of the lithium-ion battery.

In the third aspect of the present application, further provided is a lithium-ion battery, comprising an electrolyte, a positive electrode material and a negative electrode material. The positive electrode material comprises an iron-manganese-based positive electrode material. The iron-manganese-based positive electrode material is the above-mentioned iron-manganese-based positive electrode material.

The cycling stability of the lithium-ion battery using the iron-manganese-based positive electrode material of the present application is greatly improved compared with the prior art. Moreover, when the iron-manganese-based positive electrode material is a lithium-poor iron-manganese-based positive electrode material, since less Li is deintercalated during the first discharge process and more Li is intercalated during the first charge process, the first efficiency has also been significantly improved.

The present application will be described in further detail below in conjunction with specific examples, and these examples should not be construed as limiting the scope of protection claimed in the present application.

### EXAMPLE 1

1) 500g of ferrous chloride, 500g of manganese acetate and 2,000mL of water were mixed in a reaction kettle, 300g of ammonia complexing agent was added into the reaction kettle to obtain a dispersion liquid, and nitrogen was fed into the reaction kettle at a rate of 3L/min. The dispersion liquid in the reaction kettle was heated to 45°C, then sodium hydroxide solution was added into the reaction kettle to adjust the pH value of the dispersion liquid to 12, and the dispersion liquid was stirred at 300rpm to carry out a co-precipitation reaction. The product obtained by the reaction was settled for 20h, then filtered through a funnel, washed with water and dried in an oven at 100°C to obtain Fe_{0.5}Mn_{0.5}(OH)₂ precursor.
2) In a dry environment, 100g of Fe_{0.5}Mn_{0.5}(OH)₂ precursor and 4.7g of lithium hydroxide (n_{Li}:(n_{Fe}+n_{Mn})=0.1) were ball milled until uniform.
3) The uniformly mixed materials were put in a Nabertherm box-type furnace, pure oxygen was fed into the box-type furnace at a flow rate of 2L/min, and the temperature was heated up to 600°C at a rate of 2°C/min, then the temperature was kept for 5h , to obtain an intermediate product.
4) Feeding pure oxygen into the box-type furnace was stopped, and nitrogen was fed into the box-type furnace at a flow rate of 2L/min. After raising the temperature to 900°C at a heating rate of 2°C/min, and it was kept for 7h, then heating was stopped, the box-type furnace was cooled down to room temperature to obtain Li_{0.1}Fe_{0.5}Mn_{0.5}O₂ iron-manganese-based positive electrode material.

### EXAMPLE 2

The difference between Example 2 and Example 1 was that in step 2), 100g of Fe_{0.5}Mn_{0.5}(OH)₂ precursor and 14.1g of lithium hydroxide (n_{Li}:(n_{Fe}+n_{Mn})=0.3) were ball milled and mixed until uniform, after step 4), Li_{0.3}Fe_{0.5}Mn_{0.5}O₂ iron-manganese-based positive electrode material was finally obtained.

### EXAMPLE 3

The difference between Example 3 and Example 1 was that in step 2), 100g of Fe_{0.5}Mn_{0.5}(OH)₂ precursor and 18.8g of lithium hydroxide (n_{Li}:(n_{Fe}+n_{Mn})=0.4) were ball milled and mixed until uniform, after step 4), Li_{0.4}Fe_{0.5}Mn_{0.5}O₂ iron-manganese-based positive electrode material was obtained.

### EXAMPLE 4

The difference between Example 4 and Example 1 is that in step 2), 100g of Fe_{0.5}Mn_{0.5}(OH)₂ precursor and 23.5g of lithium hydroxide (n_{Li}:(n_{Fe}+n_{Mn})=0.5) were ball milled and mixed until uniform, after step 4), Li_{0.5}Fe_{0.5}Mn_{0.5}O₂ iron-manganese-based positive electrode material was obtained.

### EXAMPLE 5

The difference between Example 5 and Example 3 was that in step 3), pure oxygen was fed into the box-type furnace at a flow rate of 3L/min.

### EXAMPLE 6

The difference between Example 6 and Example 3 was that in step 3), pure oxygen was fed into the box-type furnace at a flow rate of 5L/min.

### EXAMPLE 7

The difference between Example 7 and Example 3 was that in step 3), pure oxygen was fed into the box-type furnace at a flow rate of 1L/min.

### EXAMPLE 8

The difference between Example 8 and Example 3 was that in step 3), pure oxygen was fed into the box-type furnace at a flow rate of 7L/min.

### EXAMPLE 9

The difference between Example 9 and Example 3 was that the temperature was raised to 500°C in step 3).

### EXAMPLE 10

The difference between Example 10 and Example 3 was that the temperature was raised to 700°C in step 3).

### EXAMPLE 11

The difference between Example 11 and Example 3 was that the temperature was raised to 300°C in step 3).

### EXAMPLE 12

The difference between Example 12 and Example 3 was that the temperature was raised to 900°C in step 3).

### EXAMPLE 13

The difference between Example 13 and Example 3 was that in step 3), the temperature was kept for 3h.

### EXAMPLE 14

The difference between Example 14 and Example 3 was that in step 3), the temperature was kept for 8h.

### EXAMPLE 15

The difference between Example 15 and Example 3 was that in step 3), the temperature was kept for 10h.

### EXAMPLE 16

The difference between Example 16 and Example 3 was that pure oxygen was replaced by air in step 3).

### EXAMPLE 17

The difference between Example 17 and Example 3 was that in step 3), the pure oxygen was replaced by an oxygen-containing gas with an oxygen content of 10%.

### EXAMPLE 18

The difference between Example 18 and Example 3 was that the temperature was heated up to 800°C in step 4).

### EXAMPLE 19

The difference between Example 19 and Example 3 was that the temperature was heated up to 1100°C in step 4)

### EXAMPLE 20

The difference between Example 20 and Example 3 was that the temperature was heated up to 600°C in step 4).

### EXAMPLE 21

The difference between Example 21 and Example 3 was that in step 4), the temperature was kept for 5h.

### EXAMPLE 22

The difference between Example 22 and Example 3 was that in step 4), the temperature was kept for 10h.

### EXAMPLE 23

The difference between Example 23 and Example 3 was that in step 4), the temperature was kept for 3h.

### EXAMPLE 24

The difference between Example 24 and Example 3 was that in step 4), the temperature was kept for 12h.

### EXAMPLE 25

The difference between Example 25 and Example 3 was that the addition amount of ferrous chloride in step 1) was 50g, and the addition amount of manganese acetate was 450g, and Li_{0.1}Fe_{0.1}Mn_{0.9}O₂ iron-manganese-based positive electrode material was obtained after step 4).

### EXAMPLE 26

1) 500g of ferrous chloride, 500g of manganese acetate and 2,000mL of water were mixed in the reaction kettle, 300g of ammonia complexing agent was added into the reaction kettle to obtain a dispersion liquid, and nitrogen was fed into the reaction kettle at a rate of 3L/min. The dispersion liquid in the reaction kettle was heated to 45°C, then sodium hydroxide solution was added into the reaction kettle to adjust the pH value of the dispersion liquid to 12, and the dispersion liquid was stirred at 300rpm to carry out a co-precipitation reaction. The product obtained by the reaction was settled for 20h, then filtered through a funnel, washed with water and dried in an oven at 100°C to obtain Fe_{0.5}Mn_{0.5}(OH)₂ precursor.
2) In a dry environment, 100g of Fe_{0.5}Mn_{0.5}(OH)₂ precursor and 18.8g of lithium hydroxide (n_{Li}:(n_{Fe}+n_{Mn})=0.4) were ball milled until uniform.
3) The uniformly mixed materials were put in a Nabertherm box-type furnace, pure oxygen was fed into the box-type furnace at a flow rate of 2L/min, and the temperature was heated up to 600°C at a rate of 4°C/min, then the temperature was kept for 5h, to obtain an intermediate product.
4) Feeding pure oxygen into the box-type furnace was stopped, and nitrogen was fed into the box-type furnace at a flow rate of 5L/min. After raising the temperature to 900°C at a heating rate of 4°C/min, and the temperature was kept for 7h, then heating was stopped, the box-type furnace was cooled down to room temperature to obtain Li_{0.1}Fe_{0.5}Mn_{0.5}O₂ iron-manganese-based positive electrode material.

### COMPARATIVE EXAMPLE 1

The difference between Comparative Example 1 and Example 1 was that in step 4), the feeding of pure oxygen into the chamber furnace was not stopped, and nitrogen gas was not fed into the box-type furnace.

### COMPARATIVE EXAMPLE 2

The difference between Comparative Example 2 and Example 1 was that the addition amount of lithium hydroxide in step 2) is 56.4g (n_{Li}:(n_{Fe}+n_{Mn})=1.2).

### FABRICATION OF A LITHIUM-ION BATTERY

1. Homogenous slurry coating: in a ratio of positive electrode material (iron-manganese-based positive electrode materials prepared in the examples or comparative examples): binder (polyvinylidene fluoride): conductive agent (conductive carbon black)=92:4:4, these materials were placed in the degassing machine to mix uniformly, and then they were assembled into the button battery.
2. Button battery assembly: the button battery was assembled according to the following sequence: the positive electrode shell (304 stainless steel) - flexure strip (304 stainless steel) - gasket (304 stainless steel) - positive electrode (aluminum foil coated with positive electrode material) - separator (PE) - electrolyte (1mol/ L of LiPF₆, the solvent is the mixture of EC (ethylene carbonate)and DEC (diethyl carbonate) in a volume ratio of 3:7) - negative electrode (lithium sheet) - negative electrode shell (304 stainless steel).

### PERFORMANCE TESTING

### Button battery test:

Under the condition of a constant temperature of 25°C, the assembled battery was left to stand for 12h to allow the electrolyte to fully infiltrate the electrode material. Then it was tested on the LANDCT-2001A test system.

The test results were shown in Table 1.

**Table 1**

| | First efficiency(%) | Cycling stability(%) |
|---|---|---|
| EXAMPLE 1 | 170.3 | 94.3 |
| EXAMPLE 2 | 250.2 | 89.8 |
| EXAMPLE 3 | 304.3 | 91.4 |
| EXAMPLE 4 | 247.6 | 88.1 |
| EXAMPLE 5 | 169.2 | 93.4 |
| EXAMPLE 6 | 250.0 | 90.3 |
| EXAMPLE 7 | 112.4 | 82.1 |
| EXAMPLE 8 | 117.1 | 81.2 |
| EXAMPLE 9 | 280.3 | 88.3 |
| EXAMPLE 10 | 298.9 | 89.0 |
| EXAMPLE 11 | 179.3 | 78.0 |
| EXAMPLE 12 | 196.6 | 81.9 |
| EXAMPLE 13 | 278.6 | 89.0 |
| EXAMPLE 14 | 317.4 | 89.7 |
| EXAMPLE 15 | 200.0 | 76.1 |
| EXAMPLE 16 | 223.8 | 83.9 |
| EXAMPLE 17 | 181.1 | 71.2 |
| EXAMPLE 18 | 274.3 | 91.4 |
| EXAMPLE 19 | 269.5 | 90.3 |
| EXAMPLE20 | 214.3 | 76.2 |
| EXAMPLE21 | 289.5 | 88.5 |
| EXAMPLE22 | 279.2 | 89.4 |
| EXAMPLE23 | 128.8 | 71.0 |
| EXAMPLE24 | 116.3 | 70.0 |
| EXAMPLE25 | 247.2 | 87.3 |
| EXAMPLE26 | 301.1 | 92.3 |
| COMPARATIVE EXAMPLE 1 | 91.4 | 61.4 |
| COMPARATIVE EXAMPLE 2 | 82.7 | 77.2 (10 weeks) |

From the above description, it can be seen that the above-mentioned examples of the present application have achieved the following technical effects:
In the preparation method of the present application, the ratio of the molar amount of Li in the inorganic compound of lithium to the total molar amount of Fe and Mn in the FeₓMn_{y}(OH)₂ precursor is controlled to be (0.1-0.5): 1, namely the amount of lithium is much lower than that of iron and manganese, and then an oxidation sintering and a sintering under nitrogen or inert gas atmosphere are successively carried out, so that the content of lithium in the final iron-manganese-based positive electrode material is low, while iron and manganese are the main metal elements in the iron-manganese-based positive electrode material. At the same time, through the sintering in different atmospheres in the above two stages, the oxidation valence state of each metal element in the intermediate product can be controlled, and then the oxidation of manganese to the spinel structure can be avoided while ensuring the oxidation of ferrous elements, and the second sintering can make the lithium element be fully recombined with the iron and manganese elements, so that the formed iron-manganese-based positive electrode material is more stable. Due to the lower content of lithium element and more stable structure in the formed iron-manganese-based positive electrode material, the electrochemical reaction is ingeniously used in the process of charging and discharging, so that the intercalation and deintercalation of lithium ions between the positive electrode and the electrolyte will not affect the original structure of the iron-manganese-based positive electrode material, thereby ensuring the cycling stability of the lithium-ion battery when the iron-manganese-based positive electrode material obtained in the present application is used as the positive electrode material of the lithium-ion battery.

The above descriptions are only preferred examples of the present application, and are not intended to limit the present application. For those skilled in the art, there may be various modifications and changes in the present application. Any modifications, equivalent replacements, improvements, etc. made within the spirit and principles of the present application shall be included within the protection scope of the present application.

## Claims

1. A method for preparing an iron-manganese-based positive electrode material, wherein the method for preparing an iron-manganese-based positive electrode material comprises:
Step S1, subjecting an inorganic compound of lithium and a FeₓMn_{y}(OH)₂ precursor to oxidation sintering to obtain an intermediate product, wherein 0<x<1.0, 0<y<1.0, and x+y=1, and the ratio of the molar amount of Li in the inorganic compound of lithium to the total molar amount of Fe and Mn in the FeₓMn_{y}(OH)₂ precursor is (0.1-0.5): 1; and
Step S2, subjecting the intermediate product to a second sintering under nitrogen or a first inert gas atmosphere to obtain the iron-manganese-based positive electrode material.

2. The method for preparing an iron-manganese-based positive electrode material of claim 1, wherein the oxidation sintering in the step S1 is carried out in an oxygen-containing gas, and the oxygen-containing gas has an oxygen content ranging from 20% to 100%, the oxygen-containing gas has a flow rate ranging from 2L/min to 5L/min; and the oxidation sintering is carried out at a temperature ranging from 500°C to 700°C for a holding time ranging from 3h to 8h, and a heating rate before the oxidation sintering is in a range from 2°C/min to 4°C/min.

3. The method for preparing an iron-manganese-based positive electrode material of claim 1, wherein the first inert gas is selected from one of argon and helium, and the nitrogen or the first inert gas has a flow rate ranging from 2L/min to 5L/min, the second sintering is carried out at a temperature ranging from 800°C to 1100°C for a holding time ranging from 5h to 10h, a heating rate after the oxidation sintering and before the second sintering is in a range from 2°C/min to 4°C/min, the inorganic compound of lithium is selected from one or both of lithium salt and lithium hydroxide, and the lithium salt is selected from one or more of lithium carbonate, lithium chloride and lithium bromide.

4. The method for preparing an iron-manganese-based positive electrode material of claim 1, wherein the method for preparing the iron-manganese-based positive electrode material further comprises a process of preparing the FeₓMn_{y}(OH)₂ precursor, the process of preparing the FeₓMn_{y}(OH)₂ precursor comprises the steps of:
under alkaline conditions, subjecting a first raw material system including ferrous salt and divalent manganese salt to carry out a co-precipitation reaction to obtain the FeₓMn_{y}(OH)₂ precursor.

5. The method for preparing an iron-manganese-based positive electrode material of claim 4, wherein the ferrous salt is selected from one or more of ferrous chloride, ferrous nitrate and ferrous oxalate, and the divalent manganese salt is selected from one or more of manganese chloride, manganese nitrate and manganese acetate, preferably, in the first raw material system, the molar ratio of Mn²⁺ to Fe²⁺ is (1-10):1.

6. The method for preparing an iron-manganese-based positive electrode material of claim 4, wherein the pH value of the first raw material system is in a range from 10 to 13; preferably, an alkaline reagent is used to adjust the pH value of the first raw material system, and the alkaline reagent is selected from one or more of sodium hydroxide and sodium carbonate.

7. The method for preparing an iron-manganese-based positive electrode material of claim 6, wherein the co-precipitation reaction is carried out at a temperature ranging from 40°C to 60°C, and the co-precipitation reaction is preferably carried out in nitrogen or a second inert gas atmosphere, the second inert gas is selected from one of argon, helium and hydrogen; preferably, a stirring is performed during the co-precipitation reaction; and preferably, a rate for the stirring is in a range from 200 rpm to 400 rpm.

8. The method for preparing an iron-manganese-based positive electrode material of claim 7, wherein the first raw material system further comprises a complexing agent and a solvent, and the process of preparing the FeₓMn_{y}(OH)₂ precursor comprises:
Step S1, mixing the ferrous salt, the divalent manganese salt, the complexing agent and the solvent to obtain the first raw material system; preferably, the complexing agent is selected from one or more of ammonia water, ammonium sulfate and ethylenediaminetetraacetic acid; and in the first raw material system, the complexing agent has a content ranging from 0. 8mol/L to 1. 5mol/L; and
Step S2, in the nitrogen or the second inert gas atmosphere and under the stirring condition, after heating the first raw material system to the temperature of the co-precipitation reaction, mixing the first raw material system with the alkali reagent to carry out the co-precipitation reaction, and obtaining the FeₓMn_{y}(OH)₂ precursor after aging.

9. An iron-manganese-based positive electrode material, prepared by the method for preparing an iron-manganese-based positive electrode material of any one of claims 1 to 8.

10. A lithium ion battery, comprising an electrolyte, a positive electrode material and a negative electrode material, the positive electrode material comprises an iron-manganese-based positive electrode material, wherein the iron-manganese-based positive electrode material is the iron-manganese-based positive electrode material of claim 9.
